# EUROPÄISCHE PATENTSCHRIFT

(11) **EP 1 660 344 B1**
(45) Veröffentlichungstag und Bekanntmachung des Hinweises auf die Patenterteilung: **03.10.2007**
(21) Anmeldenummer: 04763912.5
(22) Anmeldetag: 07.08.2004
(51) Int. Cl.: B60N 2/24, B60N 2/38, B64D 25/06

(54) **IN EINEM LAND-, LUFT- ODER SEEFAHRZEUG HÄNGEND ANGEORDNETER SICHERHEITSSITZ**
SAFETY SEAT THAT IS SUSPENDED IN LAND VEHICLES, AIRCRAFT OR SEA VESSELS
SIEGE DE SECURITE PLACE EN SUSPENSION DANS UN VEHICULE TERRESTRE, UN AVION OU UN BATEAU

(30) Priorität: 05.09.2003 DE 10341483
(43) Veröffentlichungstag der Anmeldung: 31.05.2006
(73) Patentinhaber: AUTOFLUG GMBH, 25462 Rellingen (DE)
(72) Erfinder: HANSEN, Holger, 20357 Hamburg (DE)
(74) Vertreter: Müller, Karl-Ernst
(86) Internationale Anmeldenummer: PCT/EP2004/008885
(87) Internationale Veröffentlichungsnummer: WO 2005/028245

(56) Entgegenhaltungen:
- WO-A-98/47762
- DE-A- 3 306 839
- DE-A- 4 303 719
- DE-A- 10 130 631
- DE-A- 19 957 814
- US-A- 2 829 702
- US-A- 4 625 335
- US-A- 5 072 840
- US-A- 5 642 916

## Beschreibung

Die Erfindung betrifft einen Sicherheitssitz für Land-, Luft- oder Seefahrzeuge, bestehend aus einem an Fixpunkten des Fahrzeuges aufgehängten und am Körper des Fahrzeuginsassen ohne feste Einbauten anzulegenden und den Fahrzeuginsassen abstützenden Gurtzeug, wobei von dem Gurtzeug textile Haltegurte zu den Fixpunkten des Fahrzeuges führen. Ein derartiger Sicherheitssitz, bei welchem das Gesäß der zu befördernden Person durch einen Gesäßgurt abgestützt ist, ist aus der DE 33 06 839 A1 bekannt.

Weiterhin sind Sicherheitssitze mit einer starren Sitzfläche entsprechend der WO 98/47762 und den darin erläuterten weiteren Druckschriften bekannt, die über entsprechende Verstrebungen mit dem Corpus des Fahrzeuges, insbesondere mit dem Fahrzeugboden, verbunden ist. Ein zugeordnetes Gurtzeug besteht in der Regel aus zwei Schultergurten und zwei Beckengurten, die mit ihrem Ende fahrzeugfest verankert sind und mit ihren anderen Enden in einem vor dem Körper der zu befördernden Person angeordneten zentralen Gurtschloss zusammenlaufen.

Insbesondere bei einem Einsatz in gepanzerten Landfahrzeugen kommt es darauf an, eine auf dem Sitz sitzende Person vor den Folgen einer beispielsweise durch die Explosion einer Mine unter dem Fahrzeugboden bewirkten Beschleunigung zu schützen, wobei sich häufig nicht nur das Fahrzeug als ganzes vom Boden abhebt, sondern sich auch der Fahrzeugboden erheblich nach innen durchbiegt. Hier weisen die fest mit dem Fahrzeugcorpus verbundenen Sicherheitssitze entsprechende Sicherheitsrisiken auf, da sie nicht nur beim Fahrbetrieb entstehende Stöße und Vibrationen auf den Fahrzeuginsassen übertragen, sondern auch keinen ausreichenden Schutz gegen Einwölbungen des Bodens bieten.

Alternativ ist bereits vorgeschlagen, entsprechende Sicherheitssitze an der Decke des betreffenden Fahrzeuges hängend anzuordnen; hiermit ist der Nachteil verbunden, dass derartige Sitze in der Regel sehr schwer sind und einen entsprechend hohen Platzbedarf haben, wobei gleichzeitig ein deutlicher Abstand zum Fahrzeugboden eingehalten werden muss, was den Platzbedarf für den Einbau des Sitzes weiter erhöht.

Schließlich ergibt sich für alle Sitzbauarten das Problem, dass die Sicherheitssitze feste Einbauten in dem Fahrzeug darstellen, die die Bewegungsfreiheit der in einem Fahrzeug sitzenden und insbesondere im militärischen Bereich entsprechende Verrichtungen durchführenden Person stark einschränken. Es kommt hinzu, dass eine Anpassung der Sicherheitssitze an unterschiedliche Körperabmessungen von Insassen nicht vorgesehen ist.

Im einzelnen ist in der DE 43 03 719 A 1 ein aus einer den Körper des Insassen im Rücken und seitlich bis über die Kopfhöhe umschließenden und einen Einstieg aufweisenden textile Hülle gebildeter Sicherheitssitz beschrieben, der oberhalb und unterhalb mittels von an der Hülle angebrachten Haltegurten zwischen dem Boden und dem Deckenbereich eines Fahrzeuges einspannbar ist.

Des weiteren ist der DE 101 30 631 A1 ein in einem minengeschützten Fahrzeug eingebauter, mit Sicherheitsgurten versehener Fahrzeugsitz zu entnehmen, der über mindestens einen Tragarm im oberen Bereich der Seitenwand des Fahrzeuges aufgehängt ist, um den Fahrzeugsitz vom Fahrzeugboden zu entkoppeln.

Auch die US 5 642 916 hat einen in einem Fahrzeug eingebauten Sitz zum Gegenstand, dessen Grundrahmen Bewegungen der Sitzfläche zulässt, wobei die Sitzfläche über an Gurtaufrollern gehalterte Haltegurte im Fahrzeug gesichert ist.

An dem in der US 4 909 459 beschriebenen Fahrzeugsitz ist eine Gurteinrichtung zur sicheren Halterung des Kopfes des Fahrzeuginsassen bei entsprechenden Fahrzeugbeschleunigungen vorgesehen.

In der DE 199 57 814 A1 schließlich ist ein mittels eines Elektromotors angetriebener Gurtaufroller mit einem von einem Aktor steuerbaren Sperrmechanismus und einer elektronischen Steuereinheit beschrieben, mittels der unterschiedliche Funktionen des Gurtaufrollers ansteuerbar sind.

In der US 5 072 840 ist eine gattungsfremde Hebevorrichtung beschrieben, die dazu dient, eine behinderte Person aus einer Liegelage in eine Sitz- oder Stehlage zu bringen. Diese Vorrichtung besteht aus einer an Fixpunkten der Hebevorrichtung aufgehängten und den Körper der behinderten Person aufnehmenden, ohne feste Einbauten anzulegenden und die Person abstützenden Textilhängematte, wobei von dieser Textilhängematte textile

Haltegurte zu den an den Fixpunkten der Hebevorrichtung angeordneten und die angeschlossenen Haltegurte jeweils in Aufwickelrichtung spannenden Gurtaufrollern geführt sind, wobei eine von dem Insassen betätigbare Schaltvorrichtung vorgesehen ist, mittels derer die Gurtaufroller paarweise schaltbar sind.

Der Erfindung liegt die Aufgabe zugrunde, einen universell einsetzbaren Sicherheitssitz zur Verfügung zu stellen, der platzsparend in dem Fahrzeug unterzubringen ist und gleichzeitig eine maximale Bewegungsfreiheit für den Insassen bei in dem Fahrzeug durchzuführenden Arbeiten gewährleistet.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass die Haltegurte von an den Fixpunkten des Fahrzeuges angeordneten Gurtaufrollern jeweils in Aufwickelrichtung vorgespannt sind und eine von dem Insassen betätigbare Schaltvorrichtung vorgesehen ist, mittels derer die Gurtaufroller entweder in einen Freilaufzustand mit freiem Gurtbandauszug entgegen der in Aufwickelrichtung vorgegebenen Vorspannung oder in einen Sperrzustand mit jeweils vollständiger, sowohl in Gurtaufwickelrichtung als auch in Gurtauszugsrichtung wirksamer Blockierung der Gurtwelle oder in einen die Gurtaufroller lediglich in Gurtauszugsrichtung sperrenden Positionierungszustand schaltbar sind.

Somit beruht die Erfindung auf dem Prinzip, den Sicherheitssitz unter Verzicht auf feste Einbauten lediglich an dem am Körper des Insassen anzulegenden Gurtzeug anzubinden und das Gurtzeug über Haltegurte an fahrzeugfest angeordneten Gurtaufrollern aufzuhängen, so dass sich eine kardanische Aufhängung des Fahrzeuginsassen mit seinem körperbezogenen Sitz zwischen den durch die Gurtaufroller gebildeten Fixpunkten ergibt. Um jedoch die in bestimmten Fahrzuständen des Fahrzeuges bzw: bei bestimmten Arbeitsbewegungen gewünschte Stabilität des Sitzes sicherzustellen, sind die Gurtaufroller zunächst mit einer die Haltegurte ständig in Aufwickelrichtung belastenden Vorspannung ausgeführt und ferner über eine von dem Fahrzeuginsassen zu bedienende Schaltvorrichtung in unterschiedlichen Betriebszuständen schaltbar. Dabei ermöglicht ein erster Schaltzustand einen Freilauf der Gurtaufroller, bei welchem die Haltegurte aus dem ungeordneten Gurtaufroller ausgezogen werden können und sich selbsttätig wieder aufwickeln. Somit kann sich der mit seinem Gurtzeug an die Gurtaufroller angeschlossene Insasse zwischen den Fixpunkten frei bewegen, wobei wegen der in Aufwickelrichtung der Haltegurte eingestellten Vorspannung jede freie Gurtlänge der Haltegurte vermieden ist. Ein zweiter Schaltzustand führt eine vollständige Sperrung der Gurtaufroller gegen Gurtbandauszug und Gurtbandeinzug herbei, und in dieser Schaltstellung sind die Haltegurte straff, jedoch unnachgiebig fixiert, so dass der Fahrzeuginsasse zwischen den Fixpunkten sozusagen eingespannt und damit ohne größere Bewegungsmöglichkeit fixiert ist. Ein dritter Schaltzustand ermöglicht ausschließlich einen Gurtbandeinzug, während der Gurtbandauszug gesperrt ist; damit ist eine Art Rücklaufsperre verwirklicht, im Rahmen derer durch Bewegungen des Fahrzeuginsassen freigegebene Gurtlänge der Haltegurte eingezogen wird, der Fahrzeuginsasse jedoch in der jeweils zuletzt eingenommenen Stellung fixiert ist, so dass ein Positionierungszustand verwirklicht ist.

Aufgrund dieser Schaltvorrichtung ist einerseits eine maximale Bewegungsfreiheit des Fahrzeuginsassen gegeben, während andererseits eine sichere Halterung und Fixierung des Fahrzeuginsassen in beliebigen Positionen innerhalb des Fahrzeuges gewährleistet ist, was anhand der Beanspruchungsprofile in einem gepanzerten Fahrzeug noch im Einzelnen zu beschreiben sein wird.

Nach einem Ausführungsbeispiel der Erfindung ist vorgesehen, dass das Gurtzeug aus einer das Gesäß des Insassen unterfassenden Gurtschlinge mit zwei längs des Oberkörpers verlaufenden Längsgurten, wenigstens einem die Längsgurte hinter dem Rücken des Insassen verbindenden Rückengurt, zwei von den Längsgurten ausgehenden, über die Schultern des Insassen geführten Schultergurten und zwei an die Längsgurte angeschlossenen Beckengurten besteht, wobei die freien Enden von Schultergurten und Beckengurten in einem Zentralgurtschloss zusammensteckbar sind.

In einer Ergänzung kann vorgesehen sein, dass die Längsgurte des Gurtzeuges in einer Verlängerung als Haltegurte zu jeweils einem oberhalb des Fahrzeuginsassen angebrachten Gurtaufroller geführt und zwei weitere Haltegurte im Beckenbereich des Fahrzeuginsassen an die Gurtschlinge angeschlossen und zu jeweils einem in Sitzrichtung vor dem Fahrzeuginsassen angebrachten Gurtaufroller geführt sind, so dass das den Fahrzeuginsassen abstützende Gurtzeug an wenigstens vier jeweils voneinander beabstandeten Gurtaufrollern aufgehängt ist.

In einer weiteren Ausführungsform richtet sich die Erfindung darauf, hinsichtlich der möglichen Sitzpositionen des Fahrzeuginsassen eine sogenannte Memoryfunktion einzurichten. So ist es unter bestimmten Einsatzbedingungen eines Fahrzeuges wünschenswert, dass der Fahrzeuginsasse ausgehend von einer obersten Position einerseits sehr schnell bevorzugt die unterste Position im Fahrzeug, andererseits aber ebenso schnell unmittelbar eine vorbestimmte Arbeitsposition im Fahrzeug einnehmen kann.

Hierzu ist nach einem Ausführungsbeispiel der Erfindung vorgesehen, dass jeder zu einem Gurtaufroller führende Haltegurt an dem Gurtzeug schlaufenartig durchlaufend gehaltert ist und von dem Gurtzeug zu einem weiteren Gurtaufroller weitergeführt ist derart, dass jeder Haltegurt an seinen beiderseits der Durchschlaufung am Gurtzeug befindlichen beiden Enden mit je einem Gurtaufroller verbunden ist, wobei die weiteren Gurtaufroller jeweils an eine zusätzliche Schaltvorrichtung mit den Funktionen des Freilaufzustandes, des Sperrzustandes und des Positionszustandes angeschlossen sind. Die zweite, zusätzliche Schaltvorrichtung dient dabei der Memoryfunktion und hat die Aufgabe, im Zusammenwirken mit den von ihr gesteuerten vier zusätzlichen Gurtaufrollern sicherzustellen, dass der Fahrzeuginsasse eine vorbestimmte Sitzposition schnell wieder einnehmen kann. In diesem Zusammenhang kann weiterhin vorgesehen sein, dass die Länge der Haltegurte derart bemessen ist, dass bei jeweils bei vollständig aus allen Gurtaufrollern ausgezogenem Gurtband die unterste Position des Sicherheitssitzes eingestellt ist.

Nach einer Ausführungsform der Erfindung kann vorgesehen sein, dass die vorstehend beschriebene Memoryfunktion durch eine entsprechende Ausbildung jedes einzelnen der vorhandenen Gurtaufroller herstellbar ist, so dass keine größere Anzahl von Gurtaufrollern erforderlich ist. Soweit also die ohnehin eingesetzten Gurtaufroller für diese Memoryfunktion nutzbar sein sollen, kann vorgesehen sein, dass jeder der Haltegurte an dem Gurtzeug schlaufenartig durchlaufend gehaltert ist und an seinen beiderseits der Durchschlaufung am Gurtzeug befindlichen beiden Enden an die zugeordneten Gurtaufroller angeschlossen ist, wobei jedem Gurtaufroller getrennt zu betätigende Schaltvorrichtungen mit den Funktionen des Freilaufzustandes, des Sperrzustandes und des Positionszustandes zugeordnet sind und jede der Schaltvorrichtungen dem Bewegungszustand jeweils einen Endes der beiden an den Gurtaufroller angeschlossenen Enden des zugeordneten Haltegurtes steuert.

Hinsichtlich der Fixierung des Insassen mit angelegtem Gurtzeug an den Gurtaufrollern ist nach einem Ausführungsbeispiel der Erfindung zunächst vorgesehen, dass an der das Gesäß des Fahrzeuginsassen unterfassenden Gurtschlinge ein zu einem im Bodenbereich des Fahrzeuges angebrachten Gurtaufroller geführter Haltegurt befestigt ist. Weiterhin kann vorgesehen sein, dass am Rückengurt des Gurtzeuges ein zu einem im Rückenbereich des Insassen am Fahrzeug angebrachten Gurtaufroller verlaufender Haltegurt angreift.

Ein verbesserter Sitz des Gurtzeuges am Körper des Insassen ergibt sich dann, wenn gemäß einem Ausführungsbeispiel der Erfindung vorgesehen ist, dass an den Längsgurten des Gurtzeuges zwei Rückengurte im Beckenbereich und im Schulterbereich angebracht sind und der Haltegurt mit dem im Schulterbereich verlaufenden Rückengurt verbunden ist.

Nach Ausführungsbeispielen der Erfindung kann vorgesehen sein, dass die Gurtschlinge einschließlich der benachbarten Längsgurtabschnitte und des im Beckenbereich angeordneten Rückengurtes über eine textile Sitzfläche miteinander verbunden sind und/oder dass die Längsgurte und die Rückengurte über eine textile Rückenlehne miteinander verbunden sind.

Soweit nach einem Ausführungsbeispiel der Erfindung vorgesehen ist, dass die Haltegurte lösbar mit den zugeordneten Gurtabschnitten des Gurtzeuges verbunden sind, ist hiermit der Vorteil verbunden, dass insbesondere die Bewegungsfreiheit des Fahrzeuginsassen beim Einstieg in das Fahrzeug verbessert ist, weil der Fahrzeuginsasse das Gurtzeug außerhalb des Fahrzeuges anlegen und nach dem Einsteigen in das Fahrzeug an die zugeordneten Haltegurte anschließen kann.

Die Lösbarkeit der Haltegurte von den am Körper des Insassen befindlichen Gurtzeugs gibt weiterhin die Möglichkeit, diese Bereiche des Gurtzeuges in die von dem Insassen zu tragende Bekleidung zu integrieren und mit dieser zu verbinden. Soweit die Insassen häufig Overalls aus entsprechend widerstandsfähigem Material tragen, können die entsprechenden Gurte in diese Overalls eingearbeitet sein, so dass die zugehörigen Haltegurte unmittelbar an die Overalls anschließbar sind.

Hinsichtlich der Ausbildung und Ansteuerung der Gurtaufroller ist nach einem Ausführungsbeispiel der Erfindung vorgesehen, dass in Reichweite des Insassen an dem Fahrzeug eine Schaltbox mit einem zwischen drei Stellungen beweglichen Schalthebel angebracht ist und von der Schaltbox zu jedem der installierten Gurtaufroller führende Steuerleitungen angeordnet sind.

Im Einzelnen kann vorgesehen sein, dass an den Gurtaufrollern die in Gurtaufwickelrichtung wirkende Vorspannung durch Federkraft erzeugt ist oder dass alternativ an den Gurtaufrollern die in Gurtaufwickelrichtung wirkende Vorspannung durch Zuschaltung eines aktiven Antriebs für die Gurtwelle erzeugbar ist.

Schließlich kann vorgesehen sein, dass die Blockierung des Gurtaufrollers in Gurtauszugsrichtung in dem Positionierungszustand durch Zuschaltung einer Ratsche herbeiführbar ist.

In der Zeichnung sind Ausführungsbeispiele wiedergegeben, die nachstehend beschrieben sind. Es zeigen:
- Fig. 1: ein mittels Haltegurten an zugeordnete Gurtaufroller angeschlossenes Gurtzeug einschließlich der den Gurtaufrollern zugeordneten Schaltvorrichtung in einer schematischen Darstellung
- Fig. 2a - 2c: ein anderes Ausführungsbeispiel der Erfindung mit einer Memoryfunktion für eine mittels der zusätzlichen Schaltvorrichtung einzustellende Arbeitsposition mit

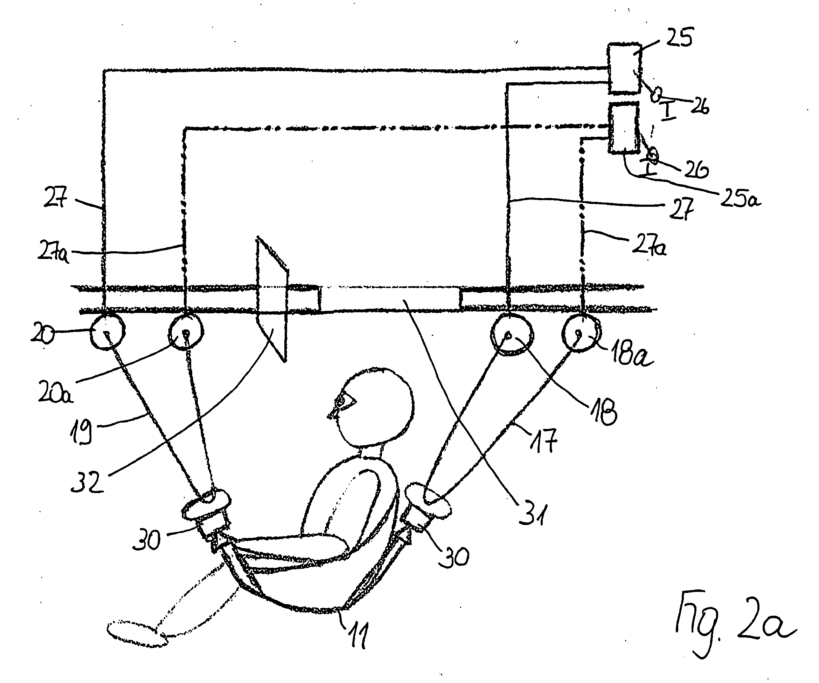

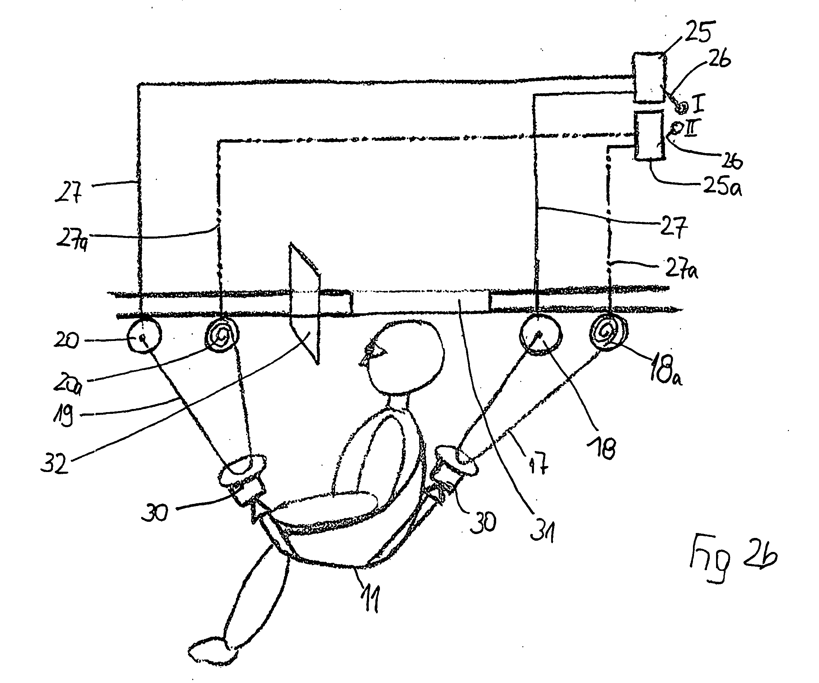

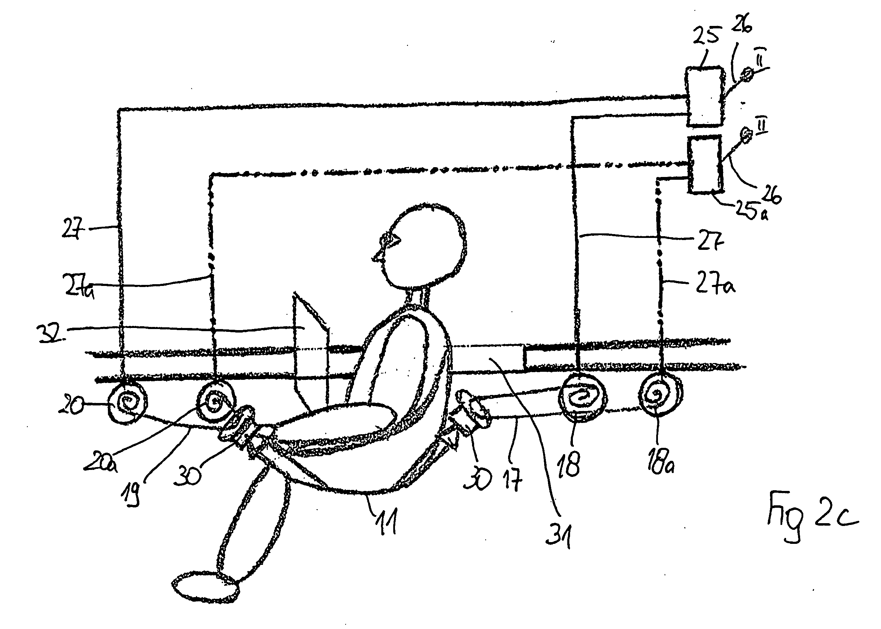

- Fig. 2a: dem Fahrzeuginsassen in der untersten Postion des Gurtzeuges,
- Fig. 2b: dem Fahrzeuginsassen in einer mittleren Arbeitsposition des Gurtzeuges,
- Fig. 2c: dem Fahrzeuginsassen in der obersten Position des Gurtzeuges.

Das aus der Zeichnung ersichtliche Gurtzeug 10 besteht zunächst aus einer das Gesäß des nicht dargestellten Insassen unterfassenden Gurtschlinge 11 mit zwei nach oben längs des Oberkörpers verlaufenden Längsgurten 12, wobei die Längsgurte 12 bei dem dargestellten Ausführungsbeispiel durch zwei Rückengurte 13 und 13a zur Abstützung des Rückens des Insassen miteinander verbunden sind, wobei der eine Rückengurt 13 im Schulterbereich und der andere Rückengurt 13a im Beckenbereich angeordnet ist. Das Gurtzeug 10 wird vervollständigt durch zwei von den Längsgurten 12 ausgehende, über die Schulter des Insassen geführte Schultergurte 14 und zwei an die Längsgurte 12 angeschlossene Beckengurte 15, wobei die freien Enden von Schultergurten 14 und Beckengurten 15 in einem Zentralgurtschloss 16 zusammensteckbar sind. Wie nicht weiter dargestellt ist vorgesehen, dass die vorstehend beschriebenen Bestandteile des Gurtzeuges 10 jeweils längenverstellbar sind, so dass sie an die Körperproportionen eines Fahrzeuginsassen anzupassen sind.

Das vorstehend beschriebene Gurtzeug 10 ist über nachstehend beschriebene Haltegurte an fahrzeugfest angebrachten Gurtaufrollern anzubringen, so dass sich eine Aufhängung des Gurtzeuges 10 zwischen den entsprechende Fixpunkte bildenden Gurtaufrollern ergibt.

Hierzu sind bei dem dargestellten Ausführungsbeispiel die Längsgurte 12 des Gurtzeuges 10 in einer Verlängerung als Haltegurte 17 zu jeweils einem oberhalb des Fahrzeuginsassen angebrachten Gurtaufroller 18 geführt; zwei weitere Haltegurte 19 greifen im Beckenbereich des Fahrzeuginsassen an der Gurtschlinge 11 an und verlaufen jeweils zu einem in Sitzrichtung vor dem Fahrzeuginsassen angebrachten Gurtaufroller 20, so dass die das Gewicht des Fahrzeuginsassen tragenden Bestandteile des Gurtzeuges 10, nämlich die Gurtschlinge 11 bzw. die Beckengurte 15 und die Längsgurte 12 an wenigstens vier jeweils voneinander beabstandeten Gurtaufrollern 18, 20 aufgehängt sind.

Zur weiteren Stabilisierung des den Sicherheitssitz ausbildenden Gurtzeuges 10 führt ein weiterer Haltegurt 21 von der das Gesäß des Fahrzeuginsassen unterfassenden Gurtschlinge 11 zu einem im Bodenbereich des Fahrzeuges angebrachten Gurtaufroller 22, und ein weiterer Haltegurt 23 führt von dem im Schulterbereich verlaufenden Rückengurt 13 zu einem im Rückenbereich des Insassen am Fahrzeug angebrachten Gurtaufroller 24.

In Sitzrichtung vor dem Fahrzeuginsassen ist in dessen Reichweite an dem Fahrzeug eine Schaltbox 25 mit einem zwischen drei Stellungen beweglichen Schalthebel 26 angebracht, wobei von der Schaltbox 25 zu jedem der installierten Gurtaufroller 18, 20, 22, 24 eine Steuerleitung 27 führt. Zum besseren Verständnis der nachstehenden Funktionsbeschreibung seien die in der Schaltbox 25 einzustellenden Schaltstellungen wie folgt charakterisiert:
- Stellung I:: Freilauf mit freiem Gurtbandauszug und freiem Gurtbandeinzug (Freilaufzustand)
- Stellung II:: vollständige Sperrung aller Gurtaufroller sowohl gegen Gurtbandauszug als auch gegen Gurtbandeinzug (Sperrzustand)
- Stellung III:: Sperrung der Gurtbandaufroller gegen Gurtbandauszug bei freiem Gurtbandeinzug (Positionierungszustand)

Legt der Fahrzeuginsasse nach dem Einstieg in das Fahrzeug das in dem Fahrzeug angeordnete Gurtzeug 10 an bzw. betritt der Fahrzeuginsasse das Fahrzeug mit dem bereits außerhalb des Fahrzeuges an seinem Körper angelegten Gurtzeug 10 zum Anschluss der Haltegurte 17, 19, 21, 23 an das Gurtzeug 10, so befindet sich der Schalthebel 26 in der Stellung 1; in dieser Schaltstellung I verbleibt der Schalthebel 26 auch in den Fällen, in denen eine freie Beweglichkeit des Fahrzeuginsassen gewünscht ist, beispielsweise bei der Beladung und Bedienung von Waffensystemen. Die Schaltstellung I ermöglicht es zudem dem Fahrzeuginsassen, sich in die gewünschte Sitzposition im Fahrzeug zu bringen. Dies gilt beispielsweise für den Fahrer eines gepanzerten Fahrzeuges in seiner Arbeits- bzw. Fahrposition mit einem aus der Luke des Fahrzeuges herausragenden Kopf bzw. Oberkörper, wobei der Schalthebel nach Erreichen der Position in die Schaltstellung II verbracht wird, in welcher die Gurtaufroller sowohl gegen weiteren Gurtbandeinzug als auch gegen Gurtbandauszug blockiert sind, so dass eine feste Fixierung des Fahrzeuginsassen mit angelegtem Gurtzeug 10 zwischen den Gurtaufrollern erfolgt. In dieser Schaltstellung wirkt das Gurtzeug 10 als ein stabiler Sicherheitssitz.

Kommt es beispielsweise für den Fahrer plötzlich zu einer Gefahrensituation, in welcher er seine Sitzposition blitzschnell korrigieren bzw. derart ändern muss, dass sein Oberkörper bzw. Kopf aus dem Bereich der Luke herauskommt, wird der Schalthebel 26 in die Schaltposition I verbracht, in welcher die Haltegurte 17, 19, 21, 23 freigegeben werden, so dass der Insasse unverzüglich in eine tiefere Sitzposition fällt. Steht der Schalthebel 26 in der Schaltstellung III, so kann sich der Insasse der gewünschten Sitzposition annähern, indem die Gurtaufroller 18, 20, 22, 24 jeweils durch die Körperbewegungen freigegebene Länge an Haltegurten einziehen, jedoch nach Art einer Rücklaufsperre kein Gurtband freigeben, so dass während der Bewegung des Fahrzeuginsassen in der Schaltstellung III des Schalthebels 26 ständig eine Absicherung des Insassen gegen heftige Fahrzeugbeschleunigungen gegeben ist.

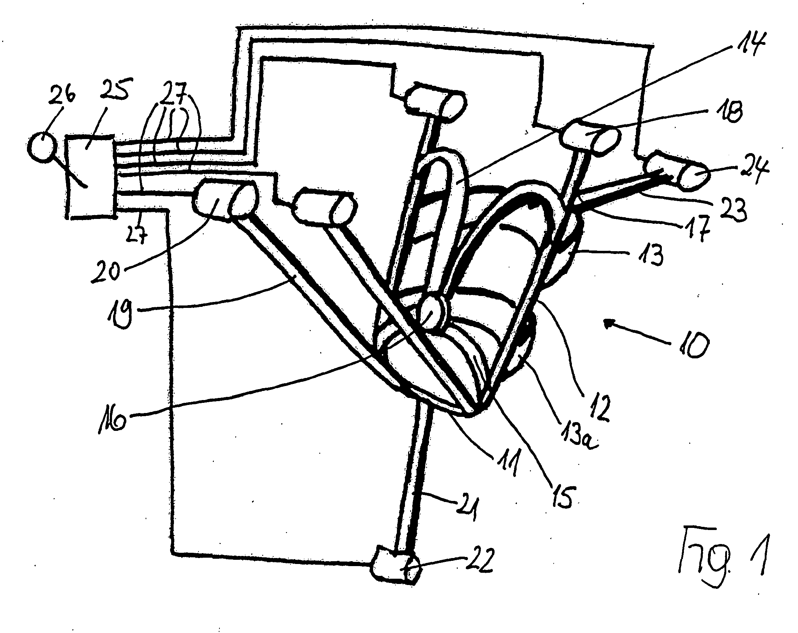

Das in den Figuren 2a - 2c dargestellte Ausführungsbeispiel beruht zunächst auf dem zu Figur 1 beschriebenen Ausführungsbeispiel und unterscheidet sich davon dadurch, dass jeder der Haltegurte 17 und 19 mit seinem einen Ende weiterhin an dem zugeordneten Gurtaufroller 18 bzw. 20 gehalten ist, wie zu Figur 1 beschrieben. Der Einfachheit halber ist in den Figuren 2a - 2c jeweils nur ein Haltegurt 17 und ein Haltegurt 19 der Gesamt-Gurtanordnung dargestellt. Statt einer festen Verbindung mit beispielsweise der Gurtschlinge 11 des Gurtzeuges 10 gemäß Figur 1 ist bei dem in Figuren 2a - 2c dargestellten Ausführungsbeispiel jeder Haltegurt 17 bzw. 19 lösbar mittels eines zugeordneten Gurtschlosses 30 mit der Gurtschlinge 11 verbunden. Jeder Haltegurt 17 bzw. 19 ist schlaufenartig durch das Gurtschloss 30 durchlaufend bis zu einem zusätzlich angeordneten Gurtaufroller 18a bzw. 20a weitergeführt und mit seinem anderen Ende an diesem zusätzlichen Gurtaufroller 18a bzw. 20a gehaltert, so dass das den Fahrzeuginsassen abstützende Gurtzeug statt an wenigstens vier Gurtaufrollern wie bei dem Ausführungsbeispiel gemäß Figur 1 nun an acht Gurtaufrollern aufgehängt ist. Die zusätzlichen Gurtaufroller 18a bzw. 20a sind über eine zusätzliche Steuerleitung 27a an eine weitere, zusätzliche Schaltvorrichtung 25a angeschlossen, die ebenfalls einen Schalthebel 26 aufweist, der in den zu Figur 1 beschriebenen Stellungen I - II - III einstellbar ist.

Die Funktion des in den Figuren 2a - 2c dargestellten Ausführungsbeispiel läuft wie folgt ab: Nach dem Anlegen des Gurtzeuges 10 schaltet der Fahrzeuginsasse beide Schaltvorrichtungen 25, 25a in die Stellung I, in welcher die Haltegurte vollständig aus den Gurtaufrollern 18, 18a, 20, 20a ausgezogen werden und der in dem Gurtzeug 10 hängende Fahrzeuginsasse die in Figur 2a dargestellte unterste Position einnimmt, in der sich in der zu Figur 1 dargestellten Funktion des Fahrzeuges der Fahrzeuginsasse unter der mit dem Bezugszeichen 31 angeordneten Luke befindet und dadurch geschützt ist. Zur Vorbereitung des Gebrauchs des Gurtzeuges wird nunmehr die Schaltvorrichtung 25 in die Position II mit einer vollständigen Sperrung der an diese Schaltvorrichtung 25 angeschlossenen Gurtaufroller 18 und 20 geschaltet, so dass die volle Auszugslänge der Haltegurte 17, 19 aus den Gurtaufrollern 18, 20 erhalten bleibt. Nun wird die zweite Schaltvorrichtung 25a in die Stellung III gebracht, in welcher ein freier Gurtbandeinzug möglich ist, und der Fahrzeuginsasse nimmt in diesem Schaltzustand die in Figur 2b dargestellte Arbeitsposition ein, in welcher sich der Fahrzeuginsasse unter der Luke 31 aber in Blickkontakt beispielsweise mit einem Winkelspiegel 32 befindet. In dieser Stellung wird die Schaltvorrichtung 25a ebenfalls in die Stellung II mit vollständiger Sperrung der angeschlossenen Gurtaufroller 18a, 20a geschaltet. Um nun in die Figur 2c dargestellte oberste Position des Fahrzeuginsassen über der Luke 31 zu gelangen, wird jetzt die Schaltvorrichtung 25 in die Stellung III mit freiem Gurtbandeinzug geschaltet, und der Fahrzeuginsasse nimmt die oberste Position (Figur 2c) ein. Danach wird die Schaltvorrichtung 25 ebenfalls in die Stellung II mit Sperrung der angeschlossenen Gurtaufroller verbracht.

Befindet sich nun der Fahrer in seiner obersten Sitzposition mit einem aus der Luke 31 des Fahrzeuges herausragenden Kopf bzw. Oberkörper und muss in einer plötzlichen Gefahrensituation seine Sitzposition blitzschnell korrigieren bzw. derart ändern, dass er in die mittlere Arbeitsposition gelangt, in welcher eine Steuerung des Fahrzeuges über Sichthilfen 32 möglich ist, so ist es lediglich erforderlich, die Feststellvorrichtung 25 in die Stellung I - Freilaufzustand - zu bringen, so dass die Haltegurte 17, 19 von den Gurtaufrollern 18 bzw. 20 schlagartig freigegeben werden. Aufgrund des Teilauszuges der Haltegurte 17, 19 in die weiterhin durch die Schaltvorrichtung 25a mit der Memory-Funktion definierte Gurtauszugslänge der Haltegurte 17, 19 aus den weiteren Gurtaufrollern 18a bzw. 20a erfolgt eine Absenkung des Gurtzeuges 10 lediglich in die Position "unter Luke" (Figur 2b). Die Schaltvorrichtung 25 kann in die Stellung II - Sperrzustand - gebracht werden, so dass diese Arbeitsstellung dauerhaft beibehalten werden kann. Kommt es zu einem weiteren Gefahrenzustand, können beide Schaltvorrichtungen 25, 25a in die Stellung I verbracht werden, in welcher automatisch die unterste Sitzposition (Figur 1a) eingenommen wird. Im Anschluss daran ist allerdings eine Justierung der Arbeitsposition "unter Luke" wieder erforderlich.

Wie nicht weiter dargestellt, können die Gurtaufroller 18 beziehungsweise 20 bei dem zu Figuren 2a bis 2c beschriebenen Ausführungsbeispiel auch so ausgelegt sein, dass die entsprechende Memoryfunktion in diese Sicherheitsgurtaufroller integriert ist. Hierzu kann jeder der an einen der Haltegurte 17, 19 angeschlossenen Sicherheitsgurtaufroller zur Aufnahme beider Enden des durch das Gurtzeug 10 durchgeschlauften Haltegurtes 17 beziehungsweise 19 eingerichtet sein, wobei jedes der beiden Enden eines Haltegurtes von an jeden Gurtaufroller getrennt angeschlossenen Schaltvorrichtungen 25 beziehungsweise 25a in seinem Bewegungszustand ansteuerbar ist. An der Memoryfunktion wie vorstehend beschrieben ändert sich dadurch nichts; es ist lediglich die Anzahl der hierfür erforderlichen Gurtaufroller verringert.

Wie ebenfalls nicht dargestellt, können die am Körper des Insassen befindlichen Teile des Gurtzeuges 10 beispielsweise in den vom Insassen zu tragenden Overall eingearbeitet sein, so dass der den Overall tragenden Insasse sich an die lösbaren Enden der Haltegurte 17 bzw. 19 anschließt, wenn er seine Position in dem Fahrzeug einnimmt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitssitz für Land-, Luft- oder Seefahrzeuge, bestehend aus einem an Fixpunkten des Fahrzeuges aufgehängten und am Körper des Fahrzeuginsassen ohne feste Einbauten anzulegenden und den Fahrzeuginsassen abstützenden Gurtzeug (10), wobei von dem Gurtzeug (10) textile Haltegurte (17, 19, 21, 23) zu den Fixpunkten des Fahrzeuges führen, **dadurch gekennzeichnet, dass** die Haltegurte (17, 19, 21, 23) von an den Fixpunkten des Fahrzeuges angeordneten Gurtaufrollern (18, 20, 22, 24) jeweils in Aufwickelrichtung vorgespannt sind und eine von dem Insassen betätigbare Schaltvorrichtung (25, 26) vorgesehen ist, mittels derer die Gurtaufroller (18, 20, 22, 24) entweder in einen Freilaufzustand mit freiem Gurtbandauszug entgegen der in Aufwickelrichtung vorgegebenen Vorspannung oder in einen Sperrzustand mit jeweils vollständiger, sowohl in Gurtaufwickelrichtung als auch in Gurtauszugsrichtung wirksamer Blockierung der Gurtwelle oder in einen die Gurtaufroller lediglich in Gurtauszugsrichtung sperrenden Positionierungszustand schaltbar sind.

2. Sicherheitssitz nach Anspruch 1, bei welchem das Gurtzeug (10) aus einer das Gesäß des Insassen unterfassenden Gurtschlinge (11) mit zwei längs des Oberkörpers verlaufenden Längsgurten (12), wenigstens einem die Längsgurte (12) hinter dem Rücken des Insassen verbindenden Rückengurt (13), zwei von den Längsgurten (12) ausgehenden, über die Schultern des Insassen geführten Schultergurten (14) und zwei an die Längsgurte (12) angeschlossenen Beckengurten (15) besteht, wobei die freien Enden von Schultergurten (14) und Beckengurten (15) in einem Zentralgurtschloss (16) zusammensteckbar sind.

3. Sicherheitssitz nach Anspruch 2, bei welchem die Längsgurte (12) des Gurtzeuges (10) in einer Verlängerung als Haltegurte (17) zu jeweils einem oberhalb des Fahrzeuginsassen angebrachten Gurtaufroller (18) geführt und zwei weitere Haltegurte (19) im Beckenbereich des Fahrzeuginsassen an die Gurtschlinge (11) angeschlossen und zu jeweils einem in Sitzrichtung vor dem Fahrzeuginsassen angebrachten Gurtaufroller (20) geführt sind, so daß das den Fahrzeuginsassen abstützende Gurtzeug (10) an wenigstens vier jeweils voneinander beabstandeten Gurtaufrollern (18, 20) aufgehängt ist.

4. Sicherheitssitz nach einem der Ansprüche 1 bis 3, bei welchem die Haltegurte (17, 19) lösbar mit den zugeordneten Gurtabschnitten des Gurtzeuges (10) verbunden sind.

5. Sicherheitssitz nach einem der Ansprüche 1 bis 4, bei welchem jeder zu einem Gurtaufroller (18, 20) führende Haltegurt (17, 19) an dem Gurtzeug (10) schlaufenartig durchlaufend gehaltert ist und von dem Gurtzeug (10) zu einem weiteren Gurtaufroller (18a, 20a) weitergeführt ist derart, dass jeder Haltegurt (17, 19) an seinen beiderseits der Durchschlaufung am Gurtzeug (10) befindlichen beiden Enden mit je einem Gurtaufroller (18, 18a; 20, 20a) verbunden ist, wobei die weiteren Gurtaufroller (18a, 20a) jeweils an eine zusätzliche Schaltvorrichtung (25a) mit den Funktionen des Freilaufzustandes, des Sperrzustandes und des Positionszustandes angeschlossen sind.

6. Sicherheitssitz nach einem der Ansprüche 1 bis 4, **dadurch gekennzeichnet, dass** jeder der Haltegurte (17, 19) an dem Gurtzeug (10) schlaufenartig durchlaufend gehaltert ist und an seinen beiderseits der Durchschlaufung am Gurtzeug (10) befindlichen beiden Enden an die zugeordneten Gurtaufroller (18, 20) angeschlossen ist, wobei jedem Gurtaufroller (18, 20) getrennt zu betätigende Schaltvorrichtungen (25, 25a) mit den Funktionen des Freilaufzustandes, des Sperrzustandes und des Positionszustandes zugeordnet sind und jede der Schaltvorrichtungen (25, 25a) den Bewegungszustand jeweils einen Endes der beiden an den Gurtaufroller (18, 20) angeschlossenen Enden des zugeordneten Haltegurtes (17, 19) steuert.

7. Sicherheitssitz nach Anspruch 6, bei welchem die Länge der Haltegurte (17, 19) derart bemessen ist, dass bei jeweils bei vollständig aus allen Gurtaufrollern (18, 18a; 20, 20a) ausgezogenem Gurtband die unterste Position des Sicherheitssitzes eingestellt ist.

8. Sicherheitssitz nach einem der Ansprüche 1 bis 7, bei welchem an der das Gesäß des Fahrzeuginsassen unterfassenden Gurtschlinge (11) ein zu einem im Bodenbereich des Fahrzeuges angebrachten Gurtaufroller (22) geführter Haltegurt (21) befestigt ist.

9. Sicherheitssitz nach einem der Ansprüche 1 bis 8, bei welchem am Rückengurt (13) des Gurtzeuges (10) ein zu einem im Rückenbereich des Insassen am Fahrzeug angebrachten Gurtaufroller (24) verlaufender Haltegurt (23) angreift.

10. Sicherheitssitz nach einem der Ansprüche 1 bis 9, bei welchem an den Längsgurten (12) des Gurtzeuges (10) zwei Rückengurte (13, 13a) im Beckenbereich und im Schulterbereich angebracht sind und der Haltegurt (23) mit dem im Schulterbereich verlaufenden Rückengurt (13) verbunden ist.

11. Sicherheitssitz nach einem der Ansprüche 1 bis 10, bei welchem die Gurtschlinge (11) einschließlich der benachbarten Längsgurtabschnitte (12) und des im Beckenbereich angeordneten Rückengurtes (13a) über eine textile Sitzfläche miteinander verbunden sind.

12. Sicherheitssitz nach einem der Ansprüche 1 bis 11, bei welchem die Längsgurte (12) und die Rückengurte (13, 13a) über eine textile Rückenlehne miteinander verbunden sind.

13. Sicherheitssitz nach einem der Ansprüche 1 bis 12, bei welchem die Haltegurte (21, 23) lösbar mit den zugeordneten Gurtabschnitten des Gurtzeuges (10) verbunden sind.

14. Sicherheitssitz nach Anspruch 12, **dadurch gekennzeichnet, dass** die mit den Haltegurten (21, 23) lösbar zu verbindenden Gurtabschnitte des Gurtzeuges (10) in die von den Insassen zu tragende Bekleidung integriert und mit dieser verbunden sind.

15. Sicherheitssitz nach einem der Ansprüche 1 bis 14, bei welchem in Reichweite des Insassen an dem Fahrzeug eine Schaltvorrichtung (25, 25a) mit einem zwischen drei Stellungen beweglichen Schalthebel (26) angebracht ist und von der Schaltvorrichtung (25, 25a) zu jedem der installierten Gurtaufroller (18, 18a; 20, 20a; 22, 24) führende Steuerleitungen (27, 27a) angeordnet sind.

16. Sicherheitssitz nach einem der Ansprüche 1 bis 15, bei welchem an den Gurtaufrollern (18, 18a; 20, 20a; 22, 24) die in Gurtaufwickelrichtung wirkende Vorspannung durch Federkraft erzeugt ist.

17. Sicherheitssitz nach einem der Ansprüche 1 bis 16, bei welchem an den Gurtaufrollern (18, 18a; 20, 20a; 22, 24) die in Gurtaufwickelrichtung wirkende Vorspannung durch Zuschaltung eines aktiven Antriebs für die Gurtwelle erzeugbar ist.

18. Sicherheitssitz nach einem der Ansprüche 1 bis 17, bei welchem die Blockierung des Gurtaufrollers (18, 18a; 20, 20a; 22, 24) in Gurtauszugsrichtung in dem Positionierungszustand durch Zuschaltung einer Ratsche herbeiführbar ist.

## Claims

1. A safety seat for land vehicles, aircraft or vessels, comprising a harness (10) that is to be suspended from fixed points of the vehicle and put onto the vehicle occupant's body without fixed components for supporting the vehicle occupant, whereby fabric supporting belts (17,19, 21, 23) extend from the harness (10) to the fixed points of the vehicle, **characterized in that** the supporting belts (17, 19, 21, 23) are pretensioned in the direction of retraction by belt retractors (18, 20, 22, 24), which are located on the fixed points of the vehicle and a switching device (25, 26) that can be operated by the occupant is provided by means of which the belt retractors (18, 20, 22, 24) can be switched into either a free running State with free belt withdrawal opposite to the pretension that is provided in the direction of retraction, or into a blocking State with complete blocking of the belt shaft effective both in the direction of belt retraction and in the direction of belt withdrawal, or into a positioning State that blocks the belt retractors solely in the direction of belt withdrawal.

2. A safety seat according to Claim 1, wherein the harness (10) comprises a belt sling (11) that supports the occupant's buttocks and has two longitudinal belts (12) that extend along the upper body, at least one back belt (13) that connects the longitudinal belts (12) behind the occupant's body, two shoulder belts (14) that start at the longitudinal belts (12) and extend over the occupant's shoulders, and two lap belts (15) that are attached to the longitudinal belts (12), whereby the free ends of the shoulder belts (14) and the lap belts (15) can be buckled together in a central belt buckle (16).

3. A safety seat according to claim 2, wherein the longitudinal belts (12) of the harness (10), in an elongation as supporting belts (17), each extend to a belt retractor (18) that is located above the occupant, and whereby two further supporting belts (19) that are attached to the belt sling (11) in the occupant's hip area each extend to a belt retractor (20) that is located in front of the seat and facing the occupant so that the harness (10) that supports the occupant is suspended from at least four belt retractors (18, 20) that are located in a distance from each other.

4. A safety seat according to one of the claims 1 through 3, wherein the supporting belts (17, 19) are releasably attached to associated belt segments of the harness (10).

5. A safety seat according to one of the claims 1 through 4,
wherein each supporting belt (17, 19) that extends to a belt retractor (18, 20) runs through and is supported on the harness (10) in a looped manner and extends from the harness (10) to a further belt retractor (18a, 20a) in such a way that both ends of each supporting belt (17, 19), which are located on both sides of the loop-like connection to the harness (10), are each connected to a belt retractor (18, 18a; 20, 20a), and whereby the additional belt retractors (18a, 20a) are each linked to an additional switching device (25a) that has the functions free running state, blocking state and positioning state.

6. A safety seat according to one of the claims 1 through 4, **characterized in that** each one of the supporting belts (17, 19) runs through and is supported on the harness (10) in a looped manner and that both ends, which are located on both sides of the loop-like connection to the harness (10), are attached to the associated belt retractors (18, 20), whereby switching devices (25, 25a) that are to be operated separately and have the functions free running state, blocking state and positioning state are assigned to each belt retractor (18, 20), and whereby each of the switching devices (25, 25a) controls the state of movement of one of the two ends of the corresponding supporting belts (17, 19) that is connected to the belt retractor (18, 20). ,

7. A safety seat according to claim 6, wherein the length of the supporting belts (17, 19) is determined in such a way that when each belt is completely withdrawn from all belt retractors (18, 18a, 20, 20a) the safety seat is located in the lowest Position.

8. A safety seat according to one of the Claims 1 through 7, wherein a supporting belt (21) that extends to a belt retractor (22) located in the floor area of the vehicle is attached to the belt sling (11) that supports the occupant's buttocks.

9. A safety seat according to one of the Claims 1 through 8, wherein a supporting belt (23), which extends to a belt retractor (24) that is attached to the vehicle in the area of the occupant's back, is connected to the back belt (13) of the harness (10).

10. A safety seat according to one of the Claims 1 through 9, wherein two back belts (13, 13a) in the shoulder and in the hip area are attached to the longitudinal belts (12) of the harness (10) and whereby the supporting belt (23) is connected to the back belt (13) that is located in the shoulder area.

11. A safety seat according to one of the claims 1 through 10, wherein the belt sling (11) including the adjacent sections of the longitudinal belts (12) and of the back belt (13a) that is located in the hip area, are interconnected by a fabric seating surface.

12. A safety seat according to one of the claims 1 through 11, wherein the longitudinal belts (12) and the back belts (13, 13a) are interconnected by a fabric backrest.

13. A safety seat according to one of the claims 1 through 12, wherein the supporting belts (21, 23) are releasably attached to the associated belt sections of the harness (10).

14. A safety seat according to claim 12, **characterized in that** the belt sections of the harness (10) that are to be releasably attached to the supporting belts (21, 23) are integrated into and connected to the occupant's clothing.

15. A safety seat according to one of the claims 1 through 14, wherein a switching device (25, 25a) with a switching lever (26) that can be moved between three positions is attached to the vehicle so as to be reachable for the occupant, and whereby control lines (27, 27a) lead from the switching device (25, 25a) to each of the installed belt retractors (18, 18a; 20, 20a; 22, 24).

16. A safety seat according to one of the claims 1 through 15, wherein the pretension on the belt retractors (18, 18a; 20, 20a; 22, 24) that is effective in the direction of belt retraction is induced by spring tension.

17. A safety seat according to one of the claims 1 through 16, wherein the pretension on the belt retractors (18, 18a, 20, 20a, 22, 24) that is effective in the direction of belt retraction can be generated by engaging an active drive mechanism for the belt shaft.

18. A safety seat according to one of the claims 1 through 17, wherein the blocking of the belt retractor (18, 18a ; 20, 20a; 22, 24) in the direction of belt withdrawal in the positioning state can be provided by a ratchet mechanism.

## Revendications

1. Siège de sécurité (10) pour véhicules de transport terrestre, aérien ou maritime, formé par un harnais (10), accroché à des points fixes du véhicule et destiné à être posé sans partie rigide sur le corps du passager et destiné à supporter le passager, des sangles de fixation (17, 19, 21, 23) textiles étant guidées depuis le harnais (10) vers les points de fixation du véhicule, **caractérisé en ce que** les sangles de fixation (17, 19, 21, 23) sont précontraintes chacune dans le sens d'enroulement par des enrouleurs de sangle (18, 20, 22, 24), agencés au niveau des points fixes du véhicule, et il est prévu un dispositif de commande (25, 26), qui peut être actionné par le passager et au moyen duquel les enrouleurs de sangle (18, 20, 22, 24) peuvent être commandés soit dans la position de rotation libre avec un déroulement libre des sangles à l'encontre de la précontrainte définie par le dispositif d'enroulement, soit dans une position de verrouillage avec un blocage complet de l'arbre d'enroulement, actif tant dans le sens d'enroulement que dans le sens de déroulement, soit dans une position de calage bloquant les enrouleurs de sangle uniquement dans le sens de déroulement des sangles.

2. Siège de sécurité selon la revendication 1, dans lequel le harnais (10) est formé par une ceinture (11), passant en dessous du séant du passager et munie de deux ceintures longitudinales (12) passant le long du tronc, au moins une ceinture de dos (13) reliant les ceintures longitudinales (12) derrière le dos du passager, deux bretelles (14) partant des ceintures longitudinales (12) et guidées au-dessus des épaules du passager, et deux ceintures de bassin (15) attachées aux ceintures longitudinales (12), les extrémités libres des bretelles (14) et des ceintures de bassin (15) pouvant être enfichées dans une boucle de fermeture centrale (16).

3. Siège de sécurité selon la revendication 2, dans lequel les ceintures longitudinales (12) du harnais (10) sont guidées chacune en se prolongeant sous forme de sangles de fixation (17) vers un enrouleur de sangle (18), disposé au-dessus du passager, et deux autres sangles de fixation (19) sont assemblées à la ceinture de séant (11) dans la région du bassin du passager et sont guidées chacune vers un enrouleur de sangle (20), monté devant le passager dans le sens de la position assise, de telle sorte que le harnais (10) supportant le passager est accroché à au moins quatre enrouleurs de sangle (18, 20) écartés respectivement les uns des autres.

4. Siège de sécurité selon l'une quelconque des revendications 1 à 3, dans lequel les sangles de fixation (17, 19) sont assemblées de manière amovible aux parties de ceinture correspondantes du harnais (10).

5. Siège de sécurité selon l'une quelconque des revendications 1 à 4, dans lequel chaque sangle de fixation (17, 19), menant vers un enrouleur de sangle (18, 20), est maintenue contre le harnais (10) en y passant en forme de boucle et est guidée à partir du harnais (10) vers un autre enrouleur de sangle (18a, 20a), de telle sorte que chaque sangle de fixation (17, 19), au niveau de ses deux extrémités situées de part et d'autre de la boucle de passage sur le harnais (10), est assemblée avec respectivement un enrouleur de sangle (18, 18a ; 20, 20a), les enrouleurs de sangle (18a, 20a) supplémentaires sont attachés chacun à un dispositif de commande (25a) supplémentaire remplissant les fonctions de la position de roulement libre, de la position de blocage et de la position de calage.

6. Siège de sécurité selon l'une quelconque des revendications 1 à 4, **caractérisé en ce que** chacune des sangles de fixation (17, 19) est maintenue contre le harnais (10) en y passant en forme de boucle et, au niveau des deux extrémités situées de part et d'autre de la boucle de passage sur le harnais (10), est attachée à l'enrouleur de sangle (18, 20) correspondant, sachant que des dispositifs de commande (25, 25a) avec les fonctions de la position de roulement libre, de la position de blocage et de la position de calage, destinés à être commandés séparément, sont associés à chaque enrouleur de sangle (18, 20) et chacun des dispositifs de commande (25, 25a) commande respectivement le mouvement de l'une des deux extrémités de la sangle de fixation (17, 19) attachées à l'enrouleur de sangle (18, 20).

7. Siège de sécurité selon la revendication 6, dans lequel la longueur des sangles de fixation (17, 19) est choisie de telle sorte que lorsque chaque sangle est tirée complètement hors de tous les enrouleurs de sangle (18, 18a ; 20, 20a), le siège de sécurité est réglé dans sa position la plus basse.

8. Siège de sécurité selon l'une quelconque des revendications 1 à 7, dans lequel une sangle de fixation (21), guidée vers un enrouleur de sangle (22) agencé dans la zone de plancher du véhicule, est fixée contre la ceinture (11) passant en dessous du séant du passager.

9. Siège de sécurité selon l'une quelconque des revendications 1 à 8, dans lequel une sangle de fixation (23), guidée vers un enrouleur de sangle (24) agencé dans le véhicule dans la zone du dos du passager, est attachée à la ceinture de dos (13) du harnais (10).

10. Siège de sécurité selon l'une quelconque des revendications 1 à 9, dans lequel deux ceintures de dos (13, 13a) sont attachées aux ceintures longitudinales (12) du harnais (10) dans la zone du bassin et dans la zone des épaules, et la sangle de fixation (23) est assemblée à la ceinture de dos (13) dans la zone des épaules.

11. Siège de sécurité selon l'une quelconque des revendications 1 à 10, dans lequel la ceinture de séant (11), y compris les parties de ceintures longitudinales (12) adjacentes et la ceinture de dos (13a) dans la région du bassin, sont reliées entre elles par l'intermédiaire d'une surface d'assise en textile.

12. Siège de sécurité Selon l'une quelconque des revendications 1 à 11, dans lequel les ceintures longitudinales (12) et les ceintures de dos (13, 13a) sont reliées entre elles par l'intermédiaire d'un dossier en textile.

13. Siège de sécurité selon l'une quelconque des revendications 1 à 12, dans lequel les sangles de fixation (21, 23) sont assemblées de manière amovible aux parties de ceinture associées du harnais (10).

14. Siège de sécurité selon la revendication 12, **caractérisé en ce que** les parties de ceinture du harnais (10), destinées à être assemblées de manière amovible avec les sangles de fixation (21, 23), sont intégrées dans le vêtement à porter par le passager et sont assemblées à ce vêtement.

15. Siège de sécurité selon l'une quelconque des revendications 1 à 14, dans lequel à portée du passager dans le véhicule est monté un dispositif de commande (25, 25a) avec un levier de commande (26), mobile entre trois positions, et sont disposées des lignes de commande (27, 27a) menant depuis le dispositif de commande (25, 25a) vers chacun des enrouleurs de sangle (18, 18a ; 20, 20a ; 22, 24) installés.

16. Siège de sécurité selon l'une quelconque des revendications 1 à 15, dans lequel les enrouleurs de sangle (18, 18a ; 20, 20a ; 22, 24) sont sollicités par une précontrainte induite par la force d'un ressort et agissant dans le sens d'enroulement des sangles.

17. Siège de sécurité selon l'une quelconque des revendications 1 à 16, dans lequel la précontrainte agissant dans le sens d'enroulement des sangles est générée sur les enrouleurs de sangle (18, 18a ; 20, 20a ; 22, 24) par le montage supplémentaire d'un système d'entraînement actif pour l'arbre d'enroulement.

18. Siège de sécurité selon l'une quelconque des revendications 1 à 17, dans lequel le blocage de l'enrouleur de sangle (18, 18a ; 20, 20a ; 22, 24) dans le sens de déroulement de la sangle dans la position de calage peut être exercé par le montage supplémentaire d'un mécanisme à cliquet.
